(19) Europäisches Patentamt
European Patent Office
Office européen des brevets

(11) **EP 4 460 411 B1**

(12) **EUROPEAN PATENT SPECIFICATION**

(45) Date of publication and mention
of the grant of the patent:
**23.07.2025 Bulletin 2025/30**

(21) Application number: **23732550.1**

(22) Date of filing: **13.06.2023**

(51) International Patent Classification (IPC):
**B23K 26/70** *(2014.01)*

(52) Cooperative Patent Classification (CPC):
**B23K 26/707**

(86) International application number:
**PCT/EP2023/065862**

(87) International publication number:
**WO 2023/242226 (21.12.2023 Gazette 2023/51)**

(54) **DETERMINING THE DEGREE OF FOULING OF A TRANSMISSIVE ELEMENT**

BESTIMMUNG DES VERSCHMUTZUNGSGRADES EINES TRANSMISSIVEN ELEMENTS

DÉTERMINATION DU DEGRÉ D'ENCRASSEMENT D'UN ÉLÉMENT DE TRANSMISSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.06.2022 EP 22179343**

(43) Date of publication of application:
**13.11.2024 Bulletin 2024/46**

(73) Proprietor: **Bystronic Laser AG
3362 Niederönz (CH)**

(72) Inventor: **KALLEN, Benjamin
3362 Niederönz (CH)**

(74) Representative: **Frei Patent Attorneys
Frei Patentanwaltsbüro AG
Hagenholzstrasse 85
8050 Zürich (CH)**

(56) References cited:
**DE-A1- 102014 203 798     DE-A1- 102020 131 980
US-A1- 2019 242 832**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention is in the field of industrial laser processing machines, for example laser cutting machines.

In laser material processing machines, a directed laser beam is caused to move relative to a workpiece to process the workpiece, for example to make a cut into the workpiece, to drill into the workpiece, to cause a local melting (for example for the purpose of fusing in a 3D printing process) or to locally modify the properties of the workpiece for any other purpose. The movement of the laser beam relative to the workpiece may be caused by a movement of a laser processing head that emits the laser beam or by a movement of the workpiece relative to a laser processing head, or both.

In such laser processing machines, the laser processing head, from which the laser beam is emitted, usually comprises a protective glass at the surface facing the workpiece, wherein the beam is emitted through the protective glass. The laser processing beam impinging on the workpiece may cause splashes of material or smoke or other emissions from the workpiece that may cause deposits on material surfaces. The protective glass ensures that such deposits are restricted to the surface of the protective glass and are prevented from getting into the interior of the laser processing head where they could potentially damage expensive equipment.

However, if the degree of fouling of a protective glass is too high, there are both, the risk that absorption and/or scattering of laser radiation leads to damages of equipment and that the quality of the processing suffers, for example because not a high enough percentage of the laser power is focused to the desired position.

Therefore, protective glasses need to be inspected regularly.

It has also been proposed to replace a visual inspection by the use of an illumination of the protective glass in combination with sensors (such as photodiodes) that detect scattered light. The higher the fouling, the more scattered light is detected. If for example a threshold value is reached, the protective glass needs cleaning or replacement.

However, not all kinds of fouling are equally detrimental. The prior art methods (see DE102020131980) feature the disadvantage that they do not have any selectivity in this respect. As a consequence, either the threshold has to be set to a very low value, in which case often operation is unnecessarily interrupted or there remains a risk that a very detrimental fouling does not trigger any replacement or cleaning action.

It is an object of the present invention to provide a method and a machine for carrying out this method, which overcome drawbacks of the prior art and which yield a reliable approach of determining whether a transmissive element can still be used or whether the degree of fouling requires replacement or cleaning.

This object is achieved by a method and a machine as defined in the claims.

The method is a method of determining the degree of fouling of a transmissive element of a laser processing machine (for example a protective window facing the workpiece), through which transmissive element in use a laser beam is directed. It comprises illuminating the transmissive element and taking an image, for example by a camera, of the illuminated transmissive element. The image will represent pollution of the transmissive element. The image is analyzed for calculating an optical element fouling value that is a quantitative measure of the degree of fouling. **In** this calculation, the distance of the pollution to an intersection position of the laser beam propagation axis through the transmissive element is taken into account in that the pollution is given a weight that depends on the distance or the pollution to the intersection position.

In the present text, "illuminating" or "light" refers to the use of electromagnetic radiation of a kind that may be used to acquire an image by an according sensor, especially an optical camera. The light may especially be visible light, but also infrared electromagnetic radiation or radiation of other parts of the electromagnetic spectrum may be used. In embodiments, the light may be red light.

The transmissive element may be a protective glass plate. However, it is possible the transmissive element, especially protective glass, has a different or further function, in addition to the protection. For example, the transmissive element may have a surface with a dedicated shape so that it acts as a lens for the laser processing beam.

In embodiments, the step of illuminating comprises illuminating the transmissive element from sideways, i.e. in a nonzero angle to the laser beam propagation axis. Especially, illuminating may comprise illuminating in an angle of 90° plus minus 25°. Thereby, the light will go right through the transmissive element and will not lead to any camera signal, except for pollution.

In addition or as an alternative, the light may be caused to impinge from a direction roughly corresponding to the direction from which the laser processing beam is directed onto the transmissive element. For example, if the method is carried out in situ, i.e., with the transmissive element mounted to a laser processing head from which the laser processing beam is emitted for processing, then illumination may be carried out by light guided to the transmissive element in parallel to the laser processing beam. For example, cladding of a transport fiber, by which the laser processing beam is coupled into the laser processing head, may be used for an illuminating beam.

Rather in general, the method may be carried out in situ or ex situ. If the method is carried out in situ, the machine that is equipped for carrying out the method is the laser processing machine itself. Illumination may take place in breaks between laser processing steps, when the laser processing beam is temporarily switched off or otherwise stopped from impinging on the workpiece so that no glow from the workpiece can interfere with the image taking. However, it is not excluded that the method can be carried out simultaneously with laser processing, for example with the aid of frequency filtering, lock-in techniques or others to eliminate the influence of light coming from the workpiece.

For carrying out the method in situ, a camera mounted to the laser processing head may be used. Cameras in laser processing heads are already known in the field, especially for monitoring the workpiece, for example for the purpose of quality control. In machines having such a camera, the method may thus be carried out using this camera, with only rather small additional equipment being required.

As an alternative to being carried out in situ, the method may also be carried out ex situ, by a separate, for example dedicated machine that comprises at least a radiation source for the illuminating step and an image acquiring unit (camera).

In both variants, the analysis and calculating steps may be carried out using image processing software that may run on the machine or a separate, for example general-purpose, computer.

The step of acquiring an image may be carried out repeatedly. Especially, it may be carried out in regular intervals (if the method is carried out in situ) or always between successive processing steps, etc.

The step of analyzing may comprise identifying pollution. Pollution may comprise pollution particles distributed over the surface and/or a polluted surface area on the surface. The step of analysing may comprise counting pollution particles and/or determining a polluted surface area.

In a group of embodiments, the image of the transmissive element is fragmented into concentric zones, with the intersection position being in the center. Then, each zone may be assigned a pollution impact value, which value is for example the higher the closer the zone is to the center. The optical element fouling value may then be a sum of zone fouling values of each zone. The respective zone fouling value is a product (or other monotonous function) of the pollution impact value and of the pollution detected in the respective zone, for example the number of counted particles or the polluted surface area or the brightness of the light caused by the pollution, etc. Also combinations are possible in which the number of particles and the polluted surface area are added together, appropriately weighted, and the result is multiplied by the pollution impact value for obtaining the zone fouling value.

More in general the optical element fouling value may be a weighted sum of optical signal portions from different parts of the image, wherein weight depends on the distance to the intersection position and may be a monotonous function of this distance (the value being lower or equal for greater distances).

In this, or in other embodiments, as an alternative to counting particles and/or determining the polluted surface area also other properties of the taken image may be used, such as the brightness (to be more specific, the power from a zone or the intensity ("radiosity")). The latter concept is based on the often at least approximately correct assumption that the contribution of the particular pollution to the image will be the higher the more it interacts with the illuminating radiation, and if the interaction with the illuminating radiation is pronounced, so will be the interaction with portions of the laser processing beam, which traverses the transmissive element.

In a most basic embodiment, the weight given to pollution represented on the image corresponds to a mere distinction between pollution within a region with radius $r_0$ around the intersection point and pollution outside of this range, wherein $r_0$ may be a value adapted to the diameter d of the laser processing beam on at the axial position of its traversal through the transmissive element. Thus, in the most simple embodiment $w(r)=\Theta(r_0-r)$ with $\Theta$ being the Heaviside step function. The diameter d (with for example $r_0=d/2$ or a value that is above d/2 by a certain percentage or similar) may depend on the actual laser processing parameters and may be adapted thereto. An adaptation of $r_0$ may be carried out automatically, by the software, if the machine by which the method is carried out is the laser processing machine itself. In such a situation, the method may comprise outputting a warning to the operator in case due to a change of processing parameters (for example a stronger focussing or a defocussing of the laser processing beam) the optical element fouling value is caused to be raised above a threshold.

In addition to concerning a method, the present invention also concerns a machine for carrying out the method. The machine may be the laser processing machine itself, which comprises the transmissive element and is equipped to carry out the method. Alternatively, the machine may be a separate machine relative to which the transmissive element may be mounted for carrying out the method. In both cases, the machine comprises a light source for illuminating an image acquiring unit (camera) for acquiring the image and electronics for carrying out the analyzing and calculating steps.

The machine is a laser cutting machine and comprises a laser cutting head, a laser source and a workpiece support, as well as a supply for a cutting gas that is emitted from a laser machining nozzle of the laser cutting head. The laser cutting machine may comprise parameters, stored in a memory to which a machine control software has access, for cutting workpieces, for example of steel. These parameters may comprise parameters that cause the laser source to emit pulsed radiation with the parameters described in the present text. The pulsed radiation may especially be generated in the quasi-CW-mode. Thus, the machine is equipped and programmed to carry out the method according to any embodiment described and claimed in this text.

Hereinafter, embodiments of the present invention are described in more detail referring to drawings. In the drawings, same reference numbers refer to same or similar components. They show:

Fig. 1:         a laser processing machine;

Fig. 2         a laser processing head;

Fig. 3         a variant of the laser processing head;

Fig. 4         a dedicated machine for carrying out the invention;

Figs. 5 and 6         examples of polluted transmissive elements;

Figs. 7 and 8         analyzed images of the transmissive elements of Figs. 5 and 6;

Figs. 9 and 10         the images of Figs. 7 and 8 together with concentric zones; and

Fig. 11         an example of a continuous weight function w(r).

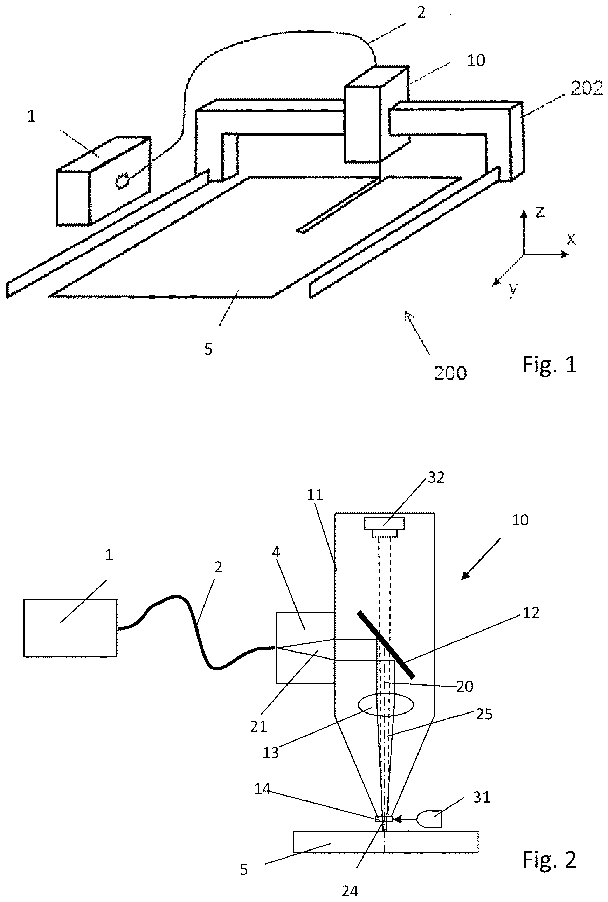

**Figure 1** shows an example of a laser cutting machine 200. The machine comprises a laser 1, a transport fiber 2, a laser cutting head being an example of a laser processing head 10, and a laser processing head moving mechanism. A workpiece 5 is supported by a working table (not shown). The laser processing head moving mechanism comprises a bridge 202 relative to which the laser processing head 10 is movable in x direction), and which itself is movable, for example on a pair or rails, in y direction relative to the working table and the workpiece 5. The workpiece 5 may be a metal sheet that is cut by a laser processing beam emitted by the laser cutting head.

In alternative embodiments, the laser processing machine may be different from a laser cutting machine, and/or the workpiece may be different from a metal sheet. The present invention does not depend on the way the laser beam emitted the laser processing head interacts with the workpiece.

**Figure 2** schematically depicts a laser processing head 10. The laser processing beam 21 produced by the laser 1 is coupled into the laser processing head via the transport fiber 2 and a fiber outcoupling optics 4. In the embodiment of Fig. 2, the laser processing head 10 comprises, arranged within its casing 11, a partially transparent, for example dichroic mirror 12. The partially transparent mirror 12 reflects at least a portion of the laser radiation onto a path that leads through a focusing optics 13 and a transmissive element 14 being a protective plate along a laser beam propagation axis 20, onto the workpiece 5. The intersection position 24 is the position at which the laser beam propagation axis 20 intersects the transmissive element 14.

In alternative embodiments, the focusing optics 13, if present, could be at least partially arranged before the partially transparent mirror 12, be at least partially constituted by the transmissive element 14 (which then may have a curved surface) and/or be at least partially constituted by the partially transparent mirror 12 (which then may be curved).

The laser processing head further comprises a light source 31, for example an LED or a laser diode arranged to couple light into the transmissive element 14, for example by illuminating it from a nonzero angle to the axis 20. In the depicted embodiment, the light source 31 illuminates the transmissive element in a right angle to the laser beam propagation axis 20.

Further, the laser processing head 10 comprises a camera 32 that is directed onto the transmissive element 14 so that it is viewed from the direction parallel to the laser beam propagation axis 20, i.e. light 25 radiating from the transmissive element 14 - for example due to scattering - back into roughly the direction of the laser beam propagation axis 20 is captured by the camera 32. To this end, the partially transparent mirror 12 is at least partially transparent for radiation of wavelengths emitted by the light source 31.

For example, the partially transparent mirror may be reflective for the laser processing beam 21 but transparent for the radiation emitted by the light source 31.

Because the light is coupled into the transmissive element from sideways (in an angle of about 90°), it will go right through the transmissive element and will not lead to any camera signal, except for pollution. Thus, what the camera picks up is an image of the pollution of the transmissive element 14.

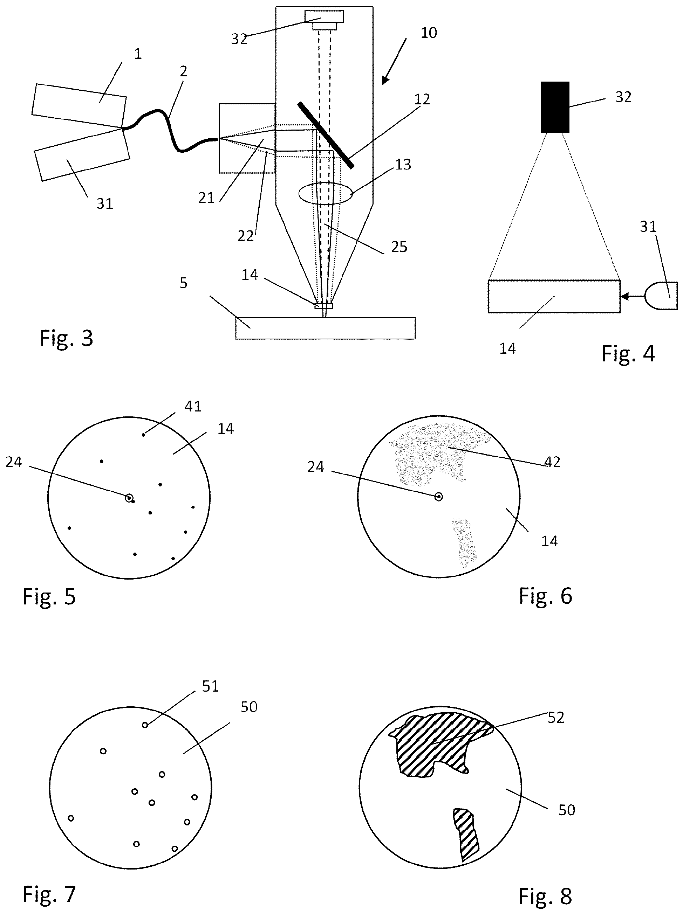

**Figure 3** shows a variant of the embodiment of Fig. 2, in which instead of a light source directly coupling light from sideways into the transmissive element 14, a second laser is used as the light source 31. The illumination radiation 22 from the second laser may have a different wavelength than the laser processing beam 21. It may be coupled into the transport fiber 2 - for example into the cladding of the transport fiber - or alternatively a second fiber may be used. In embodiments, the illumination radiation 22 is less focused than the laser processing beam 21 so that it illuminates a larger portion of the transmissive element than just the region that is traversed by the laser processing beam.

In these embodiments, the partially transparent mirror 12 will be partially transparent for the illumination radiation, so that a portion thereof is deflected onto the transmissive element 14 but a portion of the light thrown back by the transmissive element gets to the camera.

In a still further variant (not shown in Fig. 3), the light by the second laser is directed, using a separate fiber, onto the surface of the transmissive element directly along the laser beam propagation axis or from a small acute angle to the laser beam propagation axis 20. For example, the illumination radiation may be coupled out of the separate fiber immediately adjacent the camera 32.

**Figure 4** illustrates the possibility that the method of determining a degree of fouling is carried out off-line, on a separate station. The set-up with the light source 31 illuminating the transmissive element 14 from sideways and a camera 32 viewing from the direction parallel to the laser beam propagation axis is comparable to the set-up described referring to Fig. 2.

**Figure 5** shows an example of a transmissive element 14 stained by small pollution particles 41, whereas **Figure 6** depicts a transmissive element with a pollution film 42 covering parts of the surface area. Both, Fig. 5 and Fig. 6 also illustrates a central point marking the intersection position 24 at which the laser beam propagation axis 20 intersects the transmissive element (see also Fig. 2).

**Figures 7 and 8** show, for the examples of Figs. 5 and 6, respectively, the results of the image analysis of the image 50 taken by the camera. The pollution particles are identified and are assigned to their positions 51 (Fig. 7), whereas the pollution film is assigned a polluted area 52.

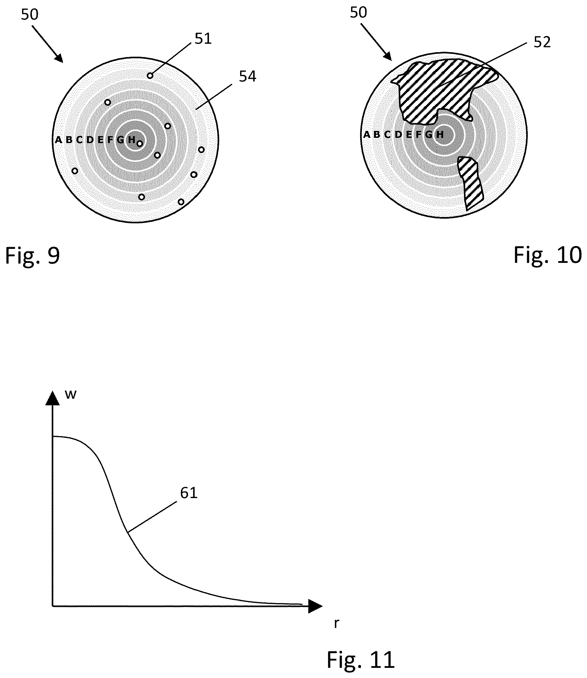

**Figures 9 and 10,** show, for the situations of Fig. 5/Fig. 7 and of Fig. 6/Fig. 8, respectively, the approach of fragmenting the image 50 into zones A.-H. that are concentric to the intersection position. Each zone is assigned a position impact value. For example, the outermost zone A may be assigned position impact value 1, the next zone B the position impact value 2, then 3, 4, ...

The zone fouling value in Fig. 9 is then for example the product of the position impact value of the particular zone multiplied by the number of pollution particles in that zone. The transmissive element fouling value is then the sum of the zone fouling values of all zones.

In Fig. 10, the zone fouling value is the product of the position impact value of the particular zone multiplied by the polluted surface area covered by the pollution film in that zone. The transmissive element fouling value is then again the sum of the zone fouling values of all zones.

Clearly, due to this approach pollution particles or polluted surface area portions are weighted more heavily if they are closer to the intersection position (the center in the depicted embodiments) so that pollution that affects the laser processing beam more strongly weights more heavily when the transmissive element fouling value is calculated.

**Figure 11** very schematically shows an example of a continuous pollution impact function 61 that defines a weight w as a function of the distance r to the intersection position. The pollution impact function can for example reflect the expected intensity distribution of the laser processing beam in the transmissive element or be any other function that gives positions close to the intersection point a higher weight than positions further away from it. In an example, the pollution impact function can be approximately Gaussian. In another example, the function is linear, i.e., w=a-b*r, where a>0 and b>0 are parameters. For particle-like pollutions as in Fig. 5/Fig. 7, the optical element fouling value F is then calculated as

$$F = \sum_{i=1}^{n} w(r_i)$$

, with $r_i$ is the distance of the $i^{th}$ particle to the intersection point. For pollution films, the fouling value follows from an integration over the polluted area portions $A_p$ (only): $F = \int_{A_p} w(r) dA$.

If the transmissive element may have both, pollutions in the form of particles and in the form of a film, for calculating the optical element fouling value, the according fouling values for particles and for films may just be added, with appropriate scaling factors.

Especially in configurations where the impact is not symmetrical about the laser beam propagation axis, the above-described approaches can be accordingly adapted: If zones are used, as illustrated in Figs. 9 and 10, then in these embodiments need not have an circular/annular shape but can have other shapes. If a continuous pollution impact function is used, the function can be a function of two dimensions w=w(x, y).

It is also possible to further develop any one of the above approaches to deal with the situation that particle pollutions may have different sizes and/or with the situation that a pollution film may bring about different degrees of shading, for example by having different thicknesses. For example, in the case of polluting particles, the fouling value may be determined as a sum:

$$F = \sum_{i=1}^{n} s_i w(r_i)$$

, where $s_i$ represents the size of each particle. In analogy $F = \int_A I(x, y) w(r) dA$, where I(x, y) is the intensity of the optical signal (representative of the thickness of the polluting film) at a particular position x,y.

**Claims**

1. Method of determining the degree of fouling of a transmissive element (14) of a laser processing machine, wherein the laser processing machine is configured for the transmissive element (14) to be intersected by a laser beam propagation axis (20) at an intersection position (24), the method comprising the steps of:

   • illuminating the transmissive element (14);
   • taking an image (50) of the illuminated transmissive element (14), wherein the image represents pollution of the transmissive element;
   • Analyzing the image and calculating an optical element fouling value being a quantitative measure of a degree of fouling of the transmissive element (14);
   • **characterized in that**, in the step of calculating the optical element fouling value, pollution represented in the image is given a weight that depends on a distance of the pollution to the intersection position (24).

2. The method according to claim 1, wherein the step of illuminating comprises illuminating in a nonzero angle to the laser beam propagation axis (20), the angle preferably being 90° +/-25°.

3. The method according to claim 1 or 2, wherein the steps of illuminating and of taking the image (50) are carried out while the transmissive element is mounted to a laser processing head (10) that is equipped to emit the laser beam onto a workpiece (5), the transmissive element (14) being a protective glass of the laser processing head.

4. The method according to any one of the previous claims, wherein the step of taking an image (50) is carried out repeatedly with an image acquiring unit (32).

5. The method according to any one of the previous claims, wherein the step of analyzing comprises the sub-step of counting pollution particles (41) and/or determining a polluted surface area (42).

6. The method according to any one of the previous claims, wherein the step of analyzing comprises the sub-step of fragmenting the image (50) into zones (A-H) concentric to the intersection position, and wherein the step of calculating comprises assigning a pollution impact value to each zone.

7. The method according to claim 6, wherein the step of analyzing comprises the further sub-step of counting pollution particles (41) and/or determining a polluted surface area (42) in each zone, and wherein the step of calculating the optical element fouling value comprises the sub-steps of calculating a zone fouling value for each zone, the zone fouling value being a monotonous function of the number of pollution particles and/or the polluted surface area of the respective zone, as well as of the pollution impact value of the respective zone.

8. The method according to any one of the previous claims, wherein the step of calculating comprises calculating the optical element fouling value as a weighted sum of a number of pollution particles and/or a weighted polluted surface area, wherein a weight is higher for particles and/or area portions, respectively, at positions closer to the intersection position (24) than for particles and/or area portions further away from the intersection position.

9. A machine for carrying out the method according to any one of the previous claims, comprising a light source (31) for illuminating the transmissive element (14), an image acquiring unit (32) for taking the image and electronics equipped and programmed to carry out the analyzing and calculating steps.

10. The machine according to claim 9 being the laser processing machine comprising a laser processing head (10) that comprises the transmissive element (14).

### Patentansprüche

1. Verfahren zum Bestimmen des Verschmutzungsgrades eines transmissiven Elements (14) einer Laserbearbeitungsmaschine, wobei die Laserbearbeitungsmaschine so konfiguriert ist, dass das transmissive Element (14) von einer Laserstrahl-Ausbreitungsachse (20) an einer Schnittposition (24) geschnitten wird, wobei das Verfahren die folgenden Schritte umfasst:

   • Beleuchten des transmissiven Elements (14);
   • Aufnehmen eines Bildes (50) des beleuchteten transmissiven Elements (14), wobei das Bild eine Verschmutzung des transmissiven Elements darstellt;
   • Analysieren des Bildes und Berechnen eines Wertes für die Verschmutzung des optischen Elements, der ein quantitatives Maß für den Verschmutzungsgrad des transmissiven Elements (14) ist;
   • **dadurch gekennzeichnet, dass** in dem Schritt des Berechnens des Verschmutzungswertes des optischen Elements der in dem Bild dargestellten Verschmutzung ein Gewicht gegeben wird, das von einem Abstand der Verschmutzung zu der Position (24) des Schnittpunkts abhängt.

2. Verfahren nach Anspruch 1, wobei der Schritt des Beleuchtens das Beleuchten in einem von Null verschiedenen Winkel zur Ausbreitungsachse (20) des Laserstrahls umfasst, wobei der Winkel vorzugsweise 90° +/-25° beträgt.

3. Verfahren nach Anspruch 1 oder 2, wobei die Schritte des Beleuchtens und des Aufnehmens des Bildes (50) durchgeführt werden, während das transmissive Element an einem Laserbearbeitungskopf (10) montiert ist, der so ausgerüstet ist, dass er den Laserstrahl auf ein Werkstück (5) abgibt, wobei das transmissive Element (14) ein Schutzglas des Laserbearbeitungskopfes ist.

4. Das Verfahren nach einem der vorherigen Ansprüche, wobei der Schritt des Aufnehmens eines Bildes (50) wiederholt mit einer Bilderfassungseinheit (32) durchgeführt wird.

**5.** Verfahren nach einem der vorhergehenden Ansprüche, wobei der Schritt des Analysierens den Teilschritt des Zählens von Verschmutzungsteilchen (41) und/oder des Bestimmens einer verschmutzten Fläche (42) umfasst.

**6.** Verfahren nach einem der vorhergehenden Ansprüche, wobei der Schritt des Analysierens den Teilschritt des Zerlegens des Bildes (50) in Zonen (A-H), die konzentrisch zur Position des Schnittpunktes liegen, umfasst, und wobei der Schritt des Berechnens das Zuordnen eines Verschmutzungsschlagwerts zu jeder Zone umfasst.

**7.** Verfahren nach Anspruch 6, wobei der Schritt des Analysierens den weiteren Unterschritt des Zählens von Verschmutzungsteilchen (41) und/oder des Bestimmens eines Verschmutzungsoberflächenbereichs (42) in jeder Zone umfasst, und wobei der Schritt des Berechnens des Verschmutzungswerts des optischen Elements die Unterschritte des Berechnens eines Zonenverschmutzungswerts für jede Zone umfasst, wobei der Zonenverschmutzungswert eine monotone Funktion der Anzahl von Verschmutzungsteilchen und/oder des Verschmutzungsoberflächenbereichs der jeweiligen Zone sowie des Verschmutzungsschlagwerts der jeweiligen Zone ist.

**8.** Verfahren nach einem der vorhergehenden Ansprüche, wobei der Schritt des Berechnens das Berechnen des Verschmutzungswertes des optischen Elements als gewichtete Summe einer Anzahl von Verschmutzungspartikeln und/oder einer gewichteten verschmutzten Fläche umfasst, wobei ein Gewicht für Teilchen bzw. Flächenabschnitte an Positionen, die näher an der Schnittpunktposition (24) liegen, höher ist als für Teilchen und/oder Flächenabschnitte, die weiter von der Schnittpunktposition entfernt sind.

**9.** Maschine zum Durchführen des Verfahrens nach einem der vorherigen Ansprüche, umfassend eine Lichtquelle (31) zur Beleuchtung des transmissiven Elements (14), eine Bilderfassungseinheit (32) zur Aufnahme des Bildes und eine Elektronik, die so ausgestattet und programmiert ist, dass sie die Analyse- und Berechnungsschritte durchführt.

**10.** Maschine nach Anspruch 9, wobei die Laserbearbeitungsmaschine einen Laserbearbeitungskopf (10) umfasst, der das transmissive Element (14) umfasst.

**Revendications**

**1.** Procédé de détermination du degré d'encrassement d'un élément de transmission (14) d'une machine de traitement laser, dans lequel la machine de traitement laser est conçue pour que l'élément de transmission (14) soit coupé par un axe de propagation de faisceau laser (20) au niveau d'une position d'intersection (24), le procédé comprenant les étapes consistant à :

• éclairer l'élément de transmission (14) ;
• prendre une image (50) de l'élément de transmission (14) éclairé, dans lequel l'image représente la pollution de l'élément de transmission ;
• analyser l'image et calculer une valeur d'encrassement d'élément optique constituant une mesure quantitative du degré d'encrassement de l'élément de transmission (14) ;
• **caractérisé en ce que**, dans l'étape consistant à calculer la valeur d'encrassement d'élément optique, la pollution représentée dans l'image se voit attribuer une pondération qui dépend d'une distance de la pollution par rapport à la position d'intersection (24).

**2.** Procédé selon la revendication 1, dans lequel l'étape consistant à éclairer comprend l'éclairage dans un angle non nul par rapport à l'axe de propagation de faisceau laser (20), l'angle étant de préférence de 90 ° +/- 25 °.

**3.** Procédé selon la revendication 1 ou 2, dans lequel les étapes consistant à éclairer et à prendre l'image (50) sont effectuées lorsque l'élément de transmission est monté sur une tête de traitement laser (10) qui est équipée pour émettre le faisceau laser sur une pièce (5), l'élément de transmission (14) étant un verre de protection de la tête de traitement laser.

**4.** Procédé selon l'une quelconque des revendications précédentes, dans lequel l'étape consistant à prendre une image (50) est effectuée de manière répétée au moyen d'une unité d'acquisition d'images (32).

**5.** Procédé selon l'une quelconque des revendications précédentes, dans lequel l'étape consistant à analyser comprend la sous-étape consistant à compter des particules de pollution (41) et/ou à déterminer une surface polluée (42).

**6.** Procédé selon l'une quelconque des revendications précédentes, dans lequel l'étape consistant à analyser comprend la sous-étape consistant à fragmenter l'image (50) en zones (A-H) concentriques à la position d'intersection, et dans lequel l'étape consistant à calculer comprend l'attribution d'une valeur d'impact de pollution à chaque zone.

**7.** Procédé selon la revendication 6, dans lequel l'étape consistant à analyser comprend la sous-étape supplémentaire consistant à compter des particules de pollution (41) et/ou à déterminer une surface polluée (42) dans chaque zone, et dans lequel l'étape consistant à calculer la valeur d'encrassement d'élément optique comprend les sous-étapes consistant à calculer une valeur d'encrassement de zone pour chaque zone, la valeur d'encrassement de zone étant une fonction monotone du nombre de particules de pollution et/ou de la surface polluée de la zone respective, ainsi que de la valeur d'impact de pollution de la zone respective.

8. Procédé selon l'une quelconque des revendications précédentes, dans lequel l'étape consistant à calculer comprend le calcul de la valeur d'encrassement d'élément optique comme une somme pondérée d'un nombre de particules de pollution et/ou d'une surface polluée pondérée, dans lequel une pondération est plus élevée pour des particules et/ou des parties d'aire, respectivement, au niveau de positions plus proches de la position d'intersection (24) que pour des particules et/ou des parties d'aire plus éloignées de la position d'intersection.

9. Machine pour la mise en œuvre du procédé selon l'une quelconque des revendications précédentes, comprenant une source lumineuse (31) pour éclairer l'élément de transmission (14), une unité d'acquisition d'images (32) pour prendre l'image et une électronique équipée et programmée pour mettre en œuvre les étapes d'analyse et de calcul.

10. Machine selon la revendication 9 étant la machine de traitement laser comprenant une tête de traitement laser (10) qui comprend l'élément de transmission (14).

Fig. 1

Fig. 2

Fig. 3

Fig. 4

Fig. 5

Fig. 6

Fig. 7

Fig. 8

Fig. 9

Fig. 10

Fig. 11

**EP 4 460 411 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102020131980